# EUROPEAN PATENT APPLICATION

(11) **EP 4 613 679 A1**
(43) Date of publication of application: **10.09.2025**
(21) Application number: 23885311.3
(22) Date of filing: 18.07.2023
(51) Int. Cl.: B65G 47/52, B65G 47/91

(54) **TRANSFER SYSTEM, CONTROL METHOD AND CONTROL PROGRAM FOR TRANSFER SYSTEM**

(30) Priority: 02.11.2022 JP 2022176598
(71) Applicant: Daifuku Co., Ltd., Osaka-shi, Osaka 555-0012 (JP)
(72) Inventor: UEDA, Yuichi, Gamo-gun, Shiga 529-1692 (JP); MORIKAWA, Masashi, Gamo-gun, Shiga 529-1692 (JP); TSUKAMOTO, Kunihiro, Gamo-gun, Shiga 529-1692 (JP); MATSUMOTO, Kosuke, Gamo-gun, Shiga 529-1692 (JP)
(74) Representative: Meissner Bolte Partnerschaft mbB
(86) International application number: PCT/JP2023/026202
(87) International publication number: WO 2024/095538

(57) **Abstract**

According to a transfer system (1), in a case where a first detecting part (201) detects that an article (2) is lifted above a first height (H1), a picking head (12a) is moved toward a second transfer position (P2) and a first container (17) in which another article (2) is housed is transported to a first transfer position (P1).

## Description

### Technical Field

The present invention relates to a transfer system which is for an article in physical distribution.

### Background Art

Conventionally, in distribution warehouses etc., a picking device (transferring part), such as a robot arm, is used so as to efficiently sort a various kinds of many articles into shipment containers according to shipment destinations. With regard to this type of picking device, Patent Literature 1 discloses an unloading device with which a load on a load-carrying platform (first transfer position) is unloaded to an unloading position (second transfer position) by using a moving device (picking device).

### Citation List

### [Patent Literature]

[Patent Literature 1]
Japanese Patent Application Publication, Tokukai, No. 2019-43772

### Summary of Invention

### Technical Problem

However, with the above-described conventional technique, a load is transferred from the load-carrying platform to the unloading position in the following manner. That is, after the load, held by the moving device, is transferred to the unloading position, the load-carrying platform is raised to a given position by a load-carrying platform raising/lowering machine; consequently, a state in which a next load can be held is achieved. Thus, it takes a long time from (a) the time when a load is held from the load-carrying platform by the moving device to (b) the time when a state in which a next load can be held is achieved. This impairs the transfer efficiency.

An aspect of the present invention has an object to provide a transfer system which enhances the transfer efficiency.

### Solution to Problem

In order to attain the above object, a transfer system in accordance with an aspect of the present invention includes: a first transporting part which transports an article to a first transfer position; a transferring part having a holding part which holds the article, the transferring part transferring the article, having been transported to the first transfer position, to a second transfer position; a first detecting part which detects that the article held by the holding part is lifted above a first height from the first transfer position; and a control part which (a) carries out control to drive the holding part so that the holding part moves toward the second transfer position and (b) controls the first transporting part so as to transport another article to the first transfer position, in a case where the first detecting part detects that the article is lifted above the first transfer position.

In order to attain the above object, a method, in accordance with an aspect of the present invention, for controlling a transfer system that includes a transporting part which transports an article to a first transfer position and a transferring part having a holding part which holds the article, the transferring part transferring the article, having been transported to the first transfer position, to a second transfer position, the method including: a detection step of detecting that the article held by the holding part is lifted above a first height from the first transfer position; and a control step of (a) carrying out control to drive the holding part so that the holding part moves toward the second transfer position and (b) controlling the transporting part so as to transport another article to the first transfer position, in a case where it is detected, in the detection step, that the article is lifted above the first transfer position.

### Advantageous Effects of Invention

In accordance with an aspect of the present invention, it is possible to shorten time taken from (a) the time when an article is held from the first transfer position and (b) the time when another article is ready to be transferred in the first transfer position. Therefore, it is possible to enhance the transfer efficiency.

### Brief Description of Drawings

Fig. 1 is a perspective view illustrating an overview of a transfer system in accordance with an embodiment of the present invention.
Fig. 2 is a plan view illustrating an overview of the transfer system shown in Fig. 1.
Fig. 3 is a control block diagram of the transfer system shown in Fig. 1.
Fig. 4 is a view illustrating an example of operation the transfer system shown in Fig. 1.
Fig. 5 is a view illustrating an example of a configuration of a transporting part of the transfer system shown in Fig. 1.

### Description of Embodiments

The following will describe details of an embodiment of the present invention. The following description will deal with an example of a configuration of a transfer system which transfers an article from a first container to a second container. Note that the following description is one example of a transfer system in accordance with the present invention, and the technical scope of the present invention is not limited to the example shown in the drawings.

### Overview of Transfer System

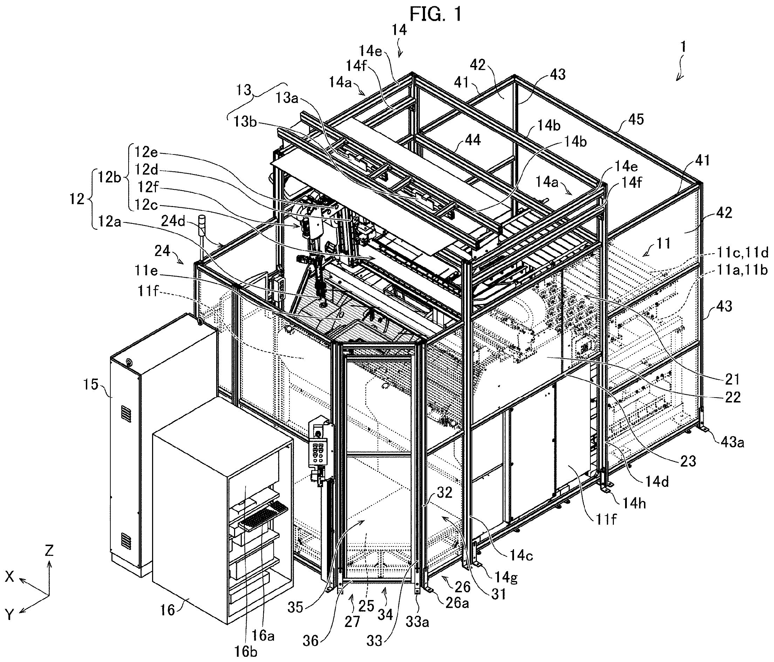

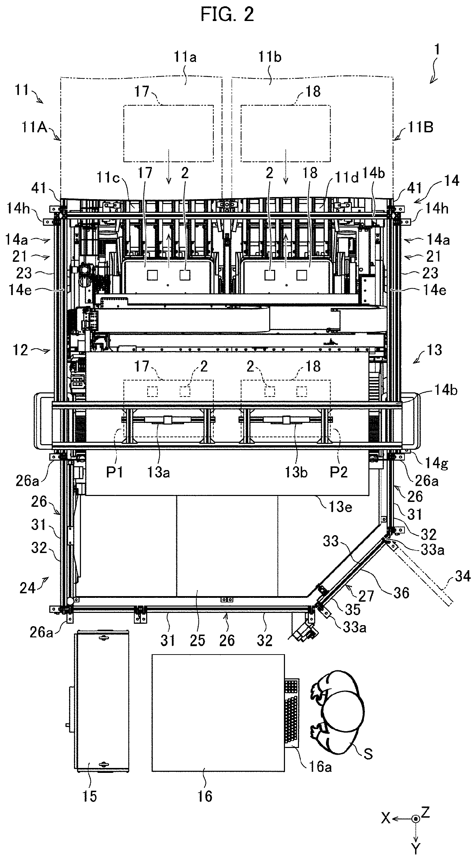

First, the following will discuss an overview of a transfer system 1 with reference to Figs. 1 and 2. Fig. 1 is a perspective view illustrating the overview of the transfer system 1 in accordance with the present embodiment. Fig. 2 is a plan view illustrating the overview of the transfer system 1. The transfer system 1 carries out transferring of an article 2 in a distribution warehouse or the like. As shown in Figs. 1 and 2, the transfer system 1 in accordance with the present embodiment includes a transporting part 11, a transferring part 12, a camera part 13, a support frame 14, a control part 15, and a terminal part 16.

### Transporting Part

The transporting part 11 transports, in a Y direction (a front-rear direction), a first container 17 and a second container 18 each configured to house an article 2 therein. To be more specific, the transporting part 11 includes (a) carry-in conveyors 11a and 11b disposed on a lower side in a Z direction and (b) carry-out conveyors 11c and 11d disposed on an upper side in the Z direction. By the carry-in conveyors 11a and 11b, the first container 17 and the second container 18 are transported toward a front side in the Y direction. By the carry-out conveyors 11c and 11d, the first container 17 and the second container 18 are transported toward a rear side in the Y direction.

Furthermore, the transporting part 11 includes a moving mechanism 11e and a housing 11f. The moving mechanism 11e causes the first container 17 coming from the carry-in conveyor 11a to be moved to a first transfer position P1 one by one in order, and causes the second container 18 coming from the carry-in conveyor 11b to be moved to a second transfer position P2 one by one in order. Moreover, the moving mechanism 11e causes the first container 17 positioned at the first transfer position P1 to be moved to the carry-out conveyor 11c one by one in order, and causes the second container 18 positioned at the second transfer position P2 to be moved to the carry-out conveyor 11d one by one in order. The housing 11f houses the moving mechanism 11e therein.

The carry-in conveyor 11a, the moving mechanism 11e, and the carry-out conveyor 11c constitute a first transporting part 11A which performs carrying-in and carrying-out of a first container 17 with respect to the first transfer position P1. Further, the carry-in conveyor 11b, the moving mechanism 11e, and the carry-out conveyor 11d constitute a second transporting part 11B which performs carrying-in and carrying-out of a second container 18 with respect to the second transfer position P2.

### Transferring Part

The transferring part 12 is disposed on a front end (one end) side of the transporting part 11 in the Y direction. The transferring part 12 holds an article 2 housed in the first container 17 positioned at the first transfer position P1, and transfers the article 2 to the second container 18 positioned at the second transfer position P2. The transferring part 12 is provided by a stand and/or the like (not illustrated) at a location which is upward of the moving mechanism 11e and the housing 11f of the transporting part 11 in the Z direction.

The transferring part 12 includes a picking head (holding part) 12a which holds the article 2 and a driving part 12b which raises and lowers the picking head 12a in the Z direction and causes the picking head 12a to move in two directions, specifically, a X direction and the Y direction in a plan view. The picking head 12a is constituted by, for example, one or more suction pads configured to suck the article 2. The picking head 12a sucks the article 2 housed in the first container 17 from above, and holds the article 2 by hanging the article 2.

The driving part 12b includes a fixed rail 12c, a first movable rail 12d, a second movable rail 12e, and a support arm 12f. The fixed rail 12c is provided along the X direction. The first movable rail 12d is provided along the Z direction, and moves in a reciprocating manner along the fixed rail 12c in the X direction. The second movable rail 12e is provided along the Y direction, and moves in a reciprocating manner along the first movable rail 12d in the Z direction.

The support arm 12f is provided along the Z direction, and moves in a reciprocating manner along the second movable rail 12e in the Y direction. Furthermore, the support arm 12f has, on its lower side in the Z direction, the picking head 12a attached thereto. Thus, by controlling operation of the driving part 12b, the transferring part 12 can cause the picking head 12a to move in a reciprocating manner in three directions, specifically, the X, Y, and Z directions.

The transferring part 12 has a structure that is simpler than that of a transferring unit such as, for example, a six-axis robot, and is easily applicable to a multi-line conveyor layout. Thus, employment of the transferring part 12 makes it possible to improve a degree of freedom in layout design of the transfer system 1.

### Camera Part

The camera part 13 is disposed above the transferring part 12, and generates a captured image by capturing an image of the article 2. The camera part 13 includes a first camera 13a and a second camera 13b. By capturing an image of the first container 17 positioned at the first transfer position P1, the first camera 13a captures an image of one or more articles 2 housed in the first container 17. By capturing an image of the second container 18 positioned at the second transfer position P2, the second camera 13b captures an image of one or more articles 2 housed in the second container 18. Note that the camera part 13 may include a light or the like, and each of the first camera 13a and the second camera 13b may capture the image of the one or more articles 2 in a state where the one or more articles 2 are irradiated with the light or like with a given intensity of illumination.

### Support Frame

A support frame 14 is a frame body which supports the camera part 13. The support frame 14 includes (i) support parts 14a and 14a that are disposed so as to be adjacent to the transferring part 12 in the X direction (a lateral direction, a second direction) perpendicular to the Y direction in a plan view and (ii) beam members 14b and 14b that are bridged between the support parts 14a and 14a. The first camera 13a and the second camera 13b are disposed at respective appropriate positions on the beam member 14b that is located on the front side in the Y direction. Note that the number of beam members 14b may be one or three or more.

Each of the support parts 14a and 14a includes two column members 14c and 14d, a girder member 14e, and a reinforcement member 14f. The column members 14c and 14d are arranged in the Y direction, and fixed, by respective fixing members 14g and 14h, to a place in which the transfer system 1 is installed. The girder member 14e and the reinforcement member 14f are bridged between the column members 14c and 14d.

Note that the beam members 14b and 14b may be disposed on the girder member 14e or may be respectively disposed to the column members 14c and 14d. The support parts 14a and 14a may each include two or more reinforcement members 14f, or the reinforcement member 14f may be omitted. In a case where each of the support parts 14a and 14a is disposed upright with four or more column members, the beam members 14b and 14b may be omitted. In this case, the first camera 13a and the second camera 13b may be disposed at respective appropriate positions on the support parts 14a and 14a.

### Control Part and Terminal Part

The control part 15 controls each part of the transfer system 1, and is constituted by a computer including a Central Processing Unit (CPU) and a memory, for example. Operation of various components is controlled by the computer executing a control program. Details of the control part 15 will be given later.

The terminal part 16 is used by a worker S (Fig. 2) to operate the transfer system 1. The terminal part 16 includes an input part 16a such as a keyboard, a touch panel, and/or a joystick and a display part 16b which displays given information. The control part 15 and the terminal part 16 are examples of a controller of the transfer system 1, and are disposed on a side (a front side in the Y direction) which is outside of a front guard part 24 (described later) and which is opposite to a side on which the transferring part 12 is provided across a work area 25.

To be more specific, the control part 15 is connected, via electric wires (not illustrated), to the transporting part 11, the transferring part 12, the camera part 13, and the terminal part 16. The control part 15 obtains, from the transporting part 11 and the transferring part 12, given pieces of information respectively indicating, e.g., various operation states. Further, the control part 15 outputs given instruction signals such as instruction signals for the transporting part 11 and the transferring part 12. The control part 15 outputs given instruction signals such as on/off signals to the first camera 13a and the second camera 13b of the camera part 13. Furthermore, the control part 15 obtains captured image data from the first camera 13a and the second camera 13b. The control part 15 receives, from the terminal part 16, an instruction signal or the like corresponding to the worker S's operation. Moreover, the control part 15 transmits, to the terminal part 16, pieces of information obtained from the transporting part 11, the transferring part 12, and the camera part 13.

### Guard

In the transfer system 1 in accordance with the present embodiment, the transferring part 12 makes a motion in such a manner that the picking head 12a moves in a reciprocating manner in three directions, i.e., the X, Y, and Z directions. Thus, as illustrated in Figs. 1 and 2, a guard for significantly reducing a possibility that the worker S and/or the like may come into contact with the transferring part 12 is provided around the transferring part 12, from the viewpoint of safety. To be more specific, in the present embodiment, as the guard, side guard parts 21, the front guard part 24, and rear guard parts 41 are provided in order from a controller side toward the rear side in the Y direction.

### Side Guard Part

As shown in Figs. 1 and 2, the support parts 14a and 14a include the respective side guard parts 21, which separate the transferring part 12 and an outside area in the X direction from each other. Each of the side guard parts 21 includes a transparent plate 22 and a frame member 23 which holds the transparent plate 22. With this, it is possible to prevent a situation in which a person, including the worker S, enters the inside in the X direction and comes into contact with the transferring part 12. Consequently, it is possible to enhance the safety of the transfer system 1.

Furthermore, since the support parts 14a and 14a are provided with the respective side guard parts 21, it is not necessary to additionally provide, to outer sides of the support parts 14a and 14a in the X direction, a guard part for separating the transferring part 12 and the outside area in the X direction from each other. As a result, it is possible to save the space of the transfer system 1.

Incidentally, since the two support parts 14a and 14a are disposed so as to be adjacent to the transferring part 12 in the X direction, the two support parts 14a and 14a are also adjacent to the housing 11f of the transporting part 11, which is located on a lower side of the transferring part 12 in the Z direction. Thus, in the present embodiment, the side guard parts 21 are omitted in lower areas, that is, areas facing the housing 11f, of the support parts 14a. Consequently, it is possible to reduce an area where the side guard parts 21 are provided. Meanwhile, it is possible to prevent, by the housing 11f, the worker S from entering the inside through the lower area of the support part 14a and coming into contact with the transferring part 12. That is, in the lower areas of the support parts 14a, the housing 11f serves as a partition between the transferring part 12 and the outside area in the X direction.

### Front Guard Part

As shown in Figs. 1 and 2, in the transfer system 1, the front guard part 24 is provided such that (i) the work area 25 positioned opposite to the transporting part 11 across the transferring part 12 in a plan view and (ii) an outside area are separated from each other by the front guard part 24. The front guard part 24 is connected to the two support parts 14a and 14a.

The work area 25 is a space where the worker S carries out manual transferring, which is a task of holding and transferring an article 2. That is, with the transfer system 1 in accordance with the present embodiment, it is possible to execute both (a) automatic transferring according to which an article 2 is held and transferred by the transferring part 12 automatically and (b) manual transferring according to which the worker S enters the work area 25 and an article 2 is held and transferred by the worker S. The front guard part 24 is provided around the work area 25 so as to be adjacent to the work area 25.

Specifically, the front guard part 24 includes a plurality of fixed-type guard parts 26 and a movable-type guard part 27 which are coupled to each other. Each of the fixed-type guard parts 26 includes a transparent plate 31 and a frame member 32 which holds the transparent plate 31. Corners of the frame member 32 which corners are on a lower side in the Z direction are fixed, by fixing members 26a, to the place where the transfer system 1 is installed. The fixed-type guard parts 26 and 26 located on the rear side in the Y direction are respectively coupled to front sides of the support parts 14a and 14a in the Y direction.

A movable-type guard part 27 constitutes an entry-and-egress door which allows the worker S to enter or exit from the work area 25. The movable-type guard part 27 includes a frame member 33 for fixing and a movable member 34 provided in the frame member 33 for fixing. Corners of the frame member 33 for fixing which corners are on the lower side in the Z direction are fixed, by fixing members 33a, to the place where the transfer system 1 is installed. The movable member 34 is attached to the frame member 33 for fixing via a hinge member (not illustrated) and/or the like in such a manner that the movable member 34 is turnable. The movable member 34 includes a transparent plate 35 and a frame member 36 which holds the transparent plate 35.

With the above configuration, it is possible to prevent a situation in which a person, including the worker S, accidentally enters the work area 25 and comes into contact with the transferring part 12. As a result, it is possible to enhance the safety of the transfer system 1. In the above configuration, the front guard part 24 is provided so as to be adjacent to the work area 25. Providing the front guard part 24 makes it possible to reduce enlargement of the installation space for the transfer system 1.

Note that, in a case where the transfer system 1 is capable of executing only the automatic transferring, the work area 25 may be set as a monitoring area where a monitoring person can monitor the transferring part 12. Alternatively, the work area 25 may be omitted. In this case, the front guard part 24 may be provided on a front side of the transferring part 12 in the Y direction so as to be adjacent to the transferring part 12.

### Rear Guard Part

As shown in Figs. 1 and 2, the transfer system 1 is provided with the rear guard parts 41 and 41 which are adjacent, in the X direction, to the front side of the transporting part 11 in the Y direction and which separate the front side and an outside area in the X direction from each other. Each of the rear guard parts 41 includes a transparent plate 42 and a frame member 43 which holds the transparent plate 42. Front sides of the rear guard parts 41 and 41 in the Y direction are respectively coupled (connected) to rear sides of the support parts 14 and 14 in the Y direction. Corners of the frame member 43 which corners are on a lower side in the Z direction are fixed, by fixing members 43a, to the place where the transfer system 1 is installed. Furthermore, reinforcement members 44 and 45 are provided between the rear guard parts 41 and 41.

With this, it is possible to prevent a situation in which a person, including the worker S, enters the inside from the transporting part 11 and comes into contact with the transferring part 12. As a result, it is possible to enhance the safety of the transfer system 1. Furthermore, in the above configuration, the rear guard parts 41 are provided so as to be adjacent to the transporting part 11. Providing the rear guard parts 41 makes it possible to reduce enlargement of the installation space for the transfer system 1.

Moreover, the front guard part 24, the side guard parts 21, and the rear guard parts 42 in accordance with the present embodiment include, as substantial guards, the transparent plates 22, 31, 35, and 42. With this, in accordance with the present embodiment, as a monitoring person, the worker S for the transfer system 1 can monitor the transporting part 11 and the transferring part 12 from the outside of the transfer system 1. Note that the transparent plates 22, 31, 35, and 42 may be replaced with guards each of which is in the shape of a fence, a net, or the like.

### Control Blocks of Transfer System 1

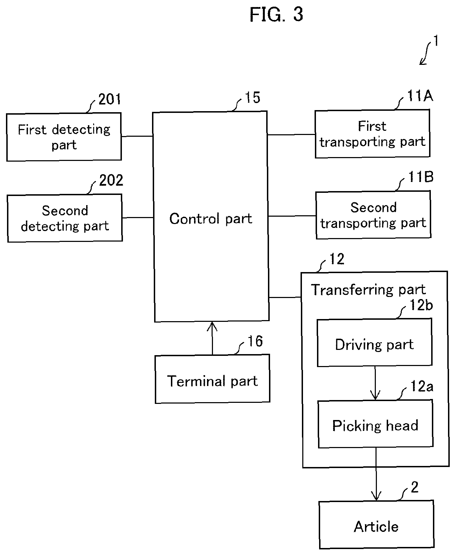

Fig. 3 is a functional block diagram illustrating an overview of the transfer system 1 in accordance with the present embodiment. As discussed above, the transfer system 1 includes the transporting part 11 (the first transporting part 11A, the second transporting part 11B), the transferring part 12, the control part 15, and the terminal part 16. In the transfer system 1, an article 2 in the first container 17 is transferred to the second container 18 by the transferring part 12. As shown in Fig. 3, the transfer system 1 further includes a first detecting part 201 disposed so as to detect an obstacle on the first container 17 and a second detecting part 202 disposed so as to detect an obstacle on the second container 18. Each of the first detecting part 201 and the second detecting part 202 is, for example, a detecting device constituted by a line sensor and/or the like.

The first detecting part 201 detects that the article 2, having been housed in the first container 17, is lifted above a prescribed height by the picking head 12a. Further, the second detecting part 202 detects that the picking head 12a is raised over a prescribed height after placing the article 2 in the second container 18. On the basis of detection results from the first detecting part 201 and the second detecting part 202, the control part 15 carries out the transporting control for the transporting part 11 and the transferring control for the transferring part 12.

### Control in Transfer System 1

### Area Detection in Transfer System 1

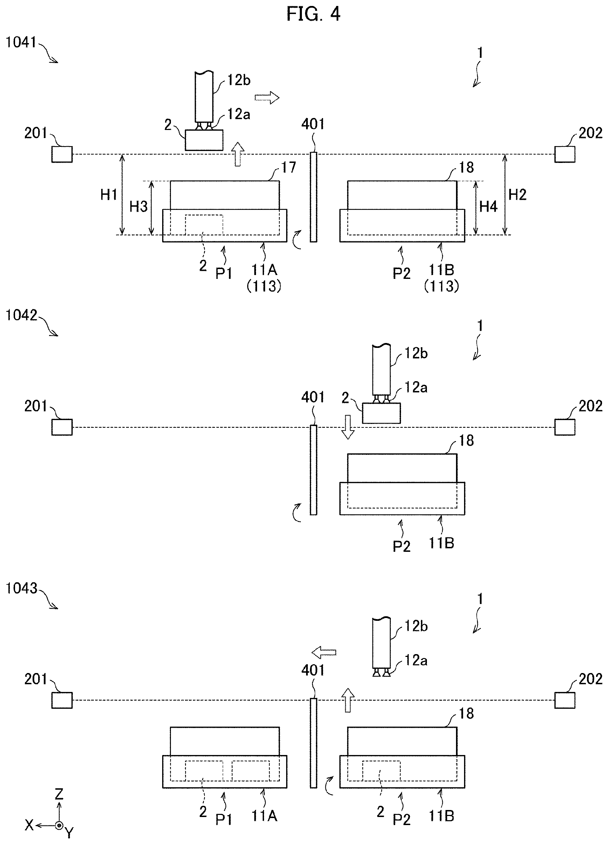

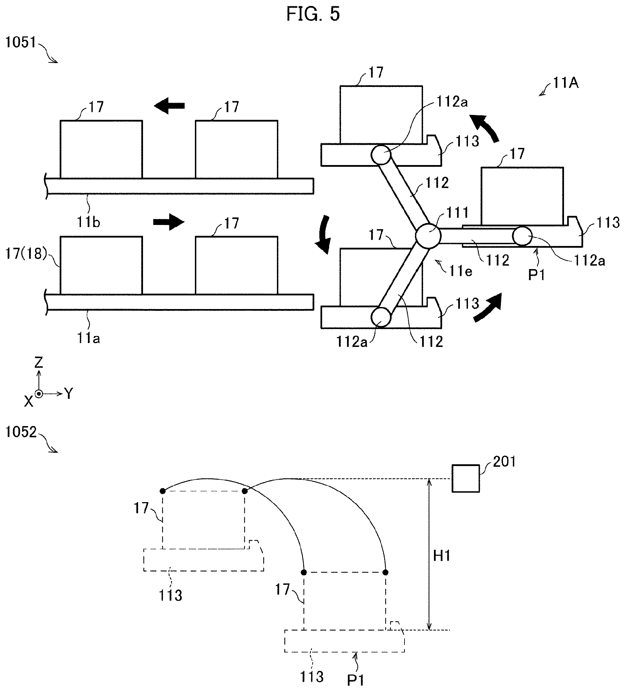

Fig. 4 is a view illustrating a flow of transfer operation for an article 2. First, the following will describe, with reference to Fig. 4, area detection in the transfer system 1. As indicated by the reference sign 1041 in Fig. 4, the first detecting part 201 is disposed so as to detect an area which is located at a prescribed height from an upper surface of the first container 17 positioned at the first transfer position P1. In the example shown in Fig. 4, the first detecting part 201 detects, at the first transfer position P1, an area which is located at a first height H1 from a placement base 113 (Fig. 5) of the first transporting part 11A on which the first container 17 can be placed. The second detecting part 202 is disposed so as to detect an area which is located at a prescribed height from an upper surface of the second container 18 positioned at the second transfer position P2. In the example shown in Fig. 4, the second detecting part 201 detects, at the second transfer position P2, an area which is located at a second height H2 from a placement base 113 (Fig. 5) of the second transporting part 11B on which the second container 18 can be placed. Note that, in the present embodiment, the first height H1 and the second height H2 are set so as to be identical to each other.

Further, a wall part 401 having a prescribed height is provided between the first transfer position P1 and the second transfer position P2. The wall part 401 has a height set so as to be slightly higher than the first height H1 and the second height H2, and separates the first transfer position P1 and the second transfer position P2 from each other so as to avoid interference between area detection by the first detecting part 201 and area detection by the second detecting part 202.

Note that, as indicated by the reference sign 1041 in Fig. 4, the first height H1 which is to be detected by the first detecting part 201 is set so as to be higher than a height H3 of the first container 17 which is placed at the first transfer position P1. With the configuration in which the first height H1 is set so as to be higher than the height H3 of the first container 17 as discussed above, it is possible to avoid a situation in which the article 2 comes into contact with the first container 17 while the picking head 12a is moving toward the second transfer position P2. Similarly, the second height H2 which is to be detected by the second detecting part 202 is set so as to be higher than a height H4 of the second container 18 which is placed at the second transfer position P2. With the configuration in which the second height H2 is set so as to be higher than the height H4 of the second container 18 as discussed above, it is possible to avoid a situation in which a tip end of the picking head 12a comes into contact with the second container 18 while the picking head 17a is moving toward the first container 17.

### Operation of Transfer System 1

Next, the following will describe, with reference to Fig. 4, a flow of operation of the transfer system 1. As indicated by the reference sign 1041 in Fig. 4, in executing the transfer operation, the control part 15 controls the driving part 12b so that the article 2 housed in the first container 17 is held by the picking head 12a and is lifted upward in the Z direction.

In replacing the first container 17 with another first container 17 during the transfer operation, the control part 15 controls both the transferring part 12 and the first transporting part 11A on the basis of a detection result from the first detecting part 201. To be more specific, when the first detecting part 201 detects that the article 20 is lifted above the first height H1 by the picking head 12a (detection step), the control part 15 carries out control to drive the transferring part 12 so as to move the picking head 12a rightward in the X direction, that is, toward the second transfer position P2, and controls the first transporting part 11A so as to transport a next first container 17 in which another article 2 is housed to the first transfer position P1 (control step).

As discussed above, when the article 2 is lifted above the first height H1 by the picking head 12a, the control part 15 immediately starts the control for moving the picking head 12a toward the second transfer position P2 and the control for transporting the next first container 17 to the first transfer position P1. Thus, as compared to, e.g., a case where the control for transporting the next first container 17 to the first transfer position P1 is carried out after the article 2 held by the picking head 12a is moved from the first transfer position P1 to the second transfer position P2, that is, after the article 2 leaves from a position above the first container 17, the above configuration can shorten time taken until the next first container 17 is transported to the first transfer position P1.

Thus, by starting the transporting control for replacing the first container 17 with another first container 17 in response to the article 2 being lifted above the first height H1 by the picking head 12a, it is possible to enhance the transfer efficiency of the transfer system 1.

Then, as indicated by the reference sign 1042 in Fig. 4, the control part 15 controls the driving part 12b so that the article 2 is placed in the second container 18. To be more specific, the driving part 12b stops the picking head 12a at a location above the second transfer position P2, that is, at a location above the second container 18, and lowers the picking head 12a. Then, when the picking head 12a reaches a location close to a bottom surface of the second container 18, the driving part 12b stops lowering so that sucking of the article by the picking head 12a is ended. Consequently, the article 2 is released from the picking head 12a, so as to be placed in the second container 18.

Thereafter, as indicated by the reference sign 1043 in Fig. 4, the control part 15 controls the driving part 12b so as to move the picking head 12a toward the first container 17. To be more specific, the driving part 12b raises the picking head 12a above the second height H2, and thereafter moves the picking head 12a leftward in the X direction.

In replacing the second container 18 with another second container 18 during the transfer operation, the control part 15 controls both the transferring part 12 and the second transporting part 11B on the basis of a detection result from the second detecting part 202. To be more specific, when the second detecting part 202 detects that the tip end of the picking head 12a has been raised above the second height H2, the control part 15 carries out control to drive the transferring part 12 so as to move the picking head 12a leftward in the X direction, that is, toward the first transfer position P1. Furthermore, the control part 15 controls the second transporting part 11B so as to transport a next second container 18 to the second transfer position P2.

As discussed above, when the tip end of the picking head 12a is lifted above the second height H2, the control part 15 immediately starts control for moving the picking head 12a toward the first transfer position P1 and control for transporting the next second container 18 to the second transfer position P2. Thus, as compared to, e.g., a case where the control for transporting the next second container 18 to the second transfer position P2 is carried out after the picking head 12a moves from the second transfer position P2 to the first transfer position P1, that is, after the picking head 12a leaves from a position above the second container 18, the above configuration can shorten time taken until the next second container 18 is transported to the second transfer position P2.

Thus, by starting the transporting control for replacing the second container 18 with another second container 18 in response to the tip end of the picking head 12a being lifted above the second height H2, it is possible to enhance the transfer efficiency of the transfer system 1.

### Details of First Height H1 and Second Height H2

Next, the following will describe, with reference to Fig. 5, details of the first height H1 and the second height H2. Fig. 5 is a view illustrating an example of a configuration of the moving mechanism 11e of the first transporting part 11A. Note that the configuration of the moving mechanism 11e in the first transporting part 11A is identical to that in the second transporting part 11B. Thus, the following description will discuss the example of the configuration of the moving mechanism 11e of the first transporting part 11A, and explanation of the moving mechanism 11e of the second transporting part 11B will be omitted.

As indicated by the reference sign 1051 in Fig. 5, the moving mechanism 11e which moves the first container 17 to the first transfer position P1 includes: a rotation shaft 111 extending in the Y direction; and a support member 112 which is connected with the rotation shaft 111 and which extends radially in three directions perpendicular to the Y direction. The support member 112 has end portions 112a which are located opposite to the rotation shaft 111. The end portions 112a are provided with placement bases 113, on each of which a first container 17 can be placed, in such a manner that the placement bases 113 are turnable. When a first container 17 is carried into the placement base 113 by the carry-in conveyor 11a, the moving mechanism 11e rotates the support member 112 (counterclockwise in Fig. 5) so that the first container 17 placed on the placement base 113 is carried from the carry-in conveyor 11a to the first transfer position P1, and then the moving mechanism 11e stops. Thereafter, in replacing the first container 17 with another first container 17, the moving mechanism 11e further rotates the support member 112 so that the first container 17 placed on the placement base 113 is moved from the first transfer position P1 to the carry-out conveyor 11c.

Note here that the first transfer position P1 is set at a height (for example, an intermediate height) between the carry-in conveyor 11a and the carry-out conveyor 11c of the first transporting part 11A. Thus, the first container 17 is transported to the first transfer position P1 in such a manner that the first container 17 is lifted from the carry-in conveyor 11a to the first transfer position P1 by the moving mechanism 11e. Further, the first container 17 is carried out of the first transfer position P1 in such a manner that the first container 17 is further lifted from the first transfer position P1 by the moving mechanism 11e and is delivered to the carry-out conveyor 11c. During this, a trajectory of the first container 17 moving from the first transfer position P1 to the carry-out conveyor 11c is in the shape of an arc, for example, as indicated by the reference sign 1052 in Fig. 5.

Thus, it is preferable that the first height H1 detected by the first detecting part 201 be set in consideration of the trajectory drawn by the first container 17 while the first container 17 is moving from the first transfer position P1 to the carry-out conveyor 11c. To be more specific, as indicated by the reference sign 1052 in Fig. 5, it is preferable that the first height H1 be set so as to be higher than a highest position in a trajectory (arc) drawn by an uppermost end of the first container 17 while the first container 17, having been placed to the first transfer position P1, is being carried out of the first transfer position P1 by the first transporting part 11A, the highest position being measured from the first transfer position P1.

By setting the first height H1, which is to be detected by the first detecting part 201, so as to be higher than the highest position in the trajectory as discussed above, it is possible to avoid a situation in which, while the first container 17 is being replaced with another first container 17 by the first transporting part 11A, the article 2, having been lifted above the first height H1 by the picking head 12a, comes into contact with the first container 17 transported from the first transfer position P1.

Similarly, it is preferable that the second height H2 be set so as to be higher than a highest position in a trajectory (arc) drawn by an uppermost end of the second container 18 while the second container 18, having been placed to the second transfer position P2, is being carried out of the second transfer position P2 by the second transporting part 11B, the highest position being measured from the second transfer position P2. With this, it is possible to avoid a situation in which, while the second container 18 is being replaced with another second container 18 by the second transporting part 11B, the tip end of the picking head 12a having raised above the second height H2 comes into contact with the second container 18 transported from the second transfer position P2.

Note that each of the first height H1 and the second height H2 can be changed as appropriate. Each of the first height H1 and the second height H2 can be appropriately adjusted in accordance with, for example, the height H3 of the first container 17 which is to be used and the height H4 of the second container 18 which is to be used, the above-described trajectories drawn by the first container 17 and the second container 18 which are being transported. Further, each of the first height H1 and the second height H2 can be set individually. The first height H1 and the second height H2 may be identical to each other or may be different from each other.

### Effects of Transfer System 1

As discussed above, the transfer system 1 in accordance with the present embodiment includes: the first transporting part 11A which transports an article 2 to the first transfer position P1; the transferring part 12 having the picking head 12a which holds the article 2, the transferring part 12 transferring the article 2, having been transported to the first transfer position P1, to the second transfer position P2; the first detecting part 201 which detects that the article 2 held by the picking head 12a is lifted above the first height H1 from the first transfer position P1; and the control part 15 which (a) carries out control to drive the picking head 12a so that the picking head 12a moves toward the second transfer position P2 and (b) controls the first transporting part 11A so as to transport another article 2 to the first transfer position P1, in a case where the first detecting part 201 detects that the article 2 is lifted above the first transfer position P1.

According to the transfer system 1, at the time when the article 2 is lifted above the first height H1 by the picking head 12a, the control for transporting another article 2 to the first transfer position P1 is started. Thus, as compared to a case where an article 2 held by the picking head 12a is transferred to the second transfer position P2 and thereafter the control for transporting another article 2 to the first transfer position P1 is carried out, the above configuration can shorten time taken until another article 2 is transported to the first transfer position P1. This can enhance the transfer efficiency.

### Software Implementation Example

The functions of the transfer system 1 (hereinafter referred to as a "device") can be realized by a program for causing a computer to function as the device, the program causing the computer to function as the control blocks (the parts included in the control part 15) of the device.

In this case, the device includes a computer that has at least one control device (for example, a processor) and at least one storage device (for example, a memory) as hardware for executing the program. The control device and the storage device execute the program, so that the functions described in the above embodiments are realized.

The program can be stored in one or more non-transitory computer-readable recording media. The recording medium can be provided in the device, or the recording medium does not need to be provided in the device. In the latter case, the program can be supplied to the device via any wired or wireless transmission medium.

Part of or all of the functions of the control blocks can be realized by a logic circuit. For example, an integrated circuit in which a logic circuit that functions as each of the control blocks is formed is also encompassed in the scope of the present invention. In addition, the function of each of the control blocks can be realized by, for example, a quantum computer.

Further, each of the processes described in the foregoing embodiments can be executed by artificial intelligence (AI). In this case, the AI may be operated by the control device or may be operated by another device (for example, an edge computer and a cloud server).

Aspects of the present invention can also be expressed as follows:
A transfer system in accordance with a first aspect of the present invention includes: a first transporting part which transports an article to a first transfer position; a transferring part having a holding part which holds the article, the transferring part transferring the article, having been transported to the first transfer position, to a second transfer position; a first detecting part which detects that the article held by the holding part is lifted above a first height from the first transfer position; and a control part which (a) carries out control to drive the holding part so that the holding part moves toward the second transfer position and (b) controls the first transporting part so as to transport another article to the first transfer position, in a case where the first detecting part detects that the article is lifted above the first transfer position.

With the above configuration, when the article is lifted above the first height by the holding part, another article is transported to the first transfer position. Therefore, as compared to a case where an article held by the holding part is transferred to the second transfer position and thereafter another article is transported to the first transfer position, the above configuration can shorten time taken until another article is transported to the first transfer position.

A transfer system in accordance with a second aspect of the present invention is configured such that, in the first aspect, the article is transported to the first transfer position by the first transporting part in a state where the article is housed in a first container; and the first height is set so as to be higher than a height of the first container which is placed at the first transfer position.

With the above configuration, it is possible to avoid a situation in which the article held by the holding part comes into contact with the first container while the holding part is moving toward the second transfer position. Further, the holding part does not hinder transportation of the second container while the first container is being transported in the first transfer position.

A transfer system in accordance with a third aspect of the present invention is configured such that, in the first or second aspect, the article is transported to the first transfer position by the first transporting part in a state where the article is housed in a first container; and the first height is set so as to be higher than a highest position in a trajectory drawn by an uppermost end of the first container while the first container, having been placed to the first transfer position by the first transporting part, is being moving away from the first transfer position, the highest position being measured from the first transfer position.

With the above configuration, the first height is set so as to be higher than the highest position in the trajectory drawn by the uppermost end of the first container while the first container, having been placed to the first transfer position by the first transporting part, is being moving away from the first transfer position, the highest position being measured from the first transfer position. Consequently, the article held above the first height by the holding part would not hinder transportation of the first container by the first transporting part. This can shorten time taken until the first container in which another article is housed is transported to the first transfer position.

A transfer system in accordance with a fourth aspect of the present invention is configured such that, in any one of the first to third aspects, the transfer system further includes: a second transporting part which transports an article placed at the second transfer position; and a second detecting part which detects that the holding part moves from the second transfer position to a position higher than a second height, wherein the control part (a) carries out control to drive the holding part so that the holding part moves toward the first transfer position and (b) controls the second transporting part so as to transport the article, having been placed to the second transfer position, to a next position, in a case where the second detecting part detects that the holding part is located at a position higher than the second transfer position.

With the above configuration, in a case where it is detected that the holding part is higher than the second height, the holding part is controlled so that the holding part moves toward the first transfer position. Consequently, in response to the detection by the second detecting part, it is possible to simultaneously carry out (a) movement of the holding part of the transferring part toward the first transfer position and (b) transportation of the article placed in the second transfer position.

A transfer system in accordance with a fifth aspect of the present invention is configured such that, in the fourth aspect, the article is transported by the second transporting part in a state where the article is housed in a second container placed at the second transfer position; and the second height is set so as to be higher than a height of the second container which is placed at the second transfer position.

With the above configuration, it is possible to avoid a situation in which the holding part comes into contact with the second container while the holding part is moving toward the first transfer position. Further, the holding part does not hinder transportation of the second container while the second container is being transported in the second transfer position.

A transfer system in accordance with a sixth aspect of the present invention is configured such that, in the fourth or fifth aspect, the article is transported by the second transporting part in a state where the article is housed in a second container placed at the second transfer position; and the second height is set so as to be higher than a highest position in a trajectory drawn by an uppermost end of the second container while the second container, having been placed to the second transfer position by the second transporting part, is being transported to the next position, the highest position being measured from the second transfer position.

With the above configuration, the second height is set so as to be higher than the highest position in the trajectory drawn by the uppermost end of the second container while the second container, having been placed to the second transfer position by the second transporting part, is being transported to the next position, the highest position being measured from the second transfer position. Consequently, the holding part held above the second height would not hinder transportation of the second container by the second transporting part.

A transfer system in accordance with a seventh aspect of the present invention is configured such that, in any one of the first to sixth aspects, the transferring part includes a driving part which raises and lowers the holding part and moves the holding part in two directions in a plan view.

A method, in accordance with an eighth aspect of the present invention, for controlling a transfer system that includes a transporting part which transports an article to a first transfer position and a transferring part having a holding part which holds the article, the transferring part transferring the article, having been transported to the first transfer position, to a second transfer position, the method including: a detection step of detecting that the article held by the holding part is lifted above a first height from the first transfer position; and a control step of (a) carrying out control to drive the holding part so that the holding part moves toward the second transfer position and (b) controlling the transporting part so as to transport another article to the first transfer position, in a case where it is detected, in the detection step, that the article is lifted above the first transfer position. This aspect brings about similar effects to those of the first aspect.

A transfer system in accordance with each of the aspects of the present invention and a method for controlling the transfer system can be realized by a computer. In this case, the present invention encompasses: a control program for a transfer system, the control program causing a computer to function as each of the parts and the steps (software elements) included in the transfer system and the method for controlling the transfer system so as to realize, by the computer, the transfer system and the method for controlling the transfer system; and a computer-readable recording medium having the control program stored therein.

The present invention is not limited to the foregoing embodiments, but can be altered by a skilled person in the art within the scope of the claims. The present invention also encompasses, in its technical scope, any embodiment derived by combining technical means disclosed in the different embodiments.

### Reference Signs List

1: transfer system
2: article
11: transporting part
11A: first transporting part
11B: second transporting part
11a: carry-in conveyor (first transporting part)
11b: carry-in conveyor (second transporting part)
11c: carry-out conveyor (first transporting part)
11d: carry-out conveyor (second transporting part)
11e: moving mechanism (first transporting part, second transporting part)
12: transferring part
12a: picking head
12b: driving part
15: control part
17: first container
18: second container
201: first detecting part
202: second detecting part
H1: first height
H2: second height
H3: height of first container
H4: height of second container
P1: first transfer position
P2: second transfer position

## Claims

1. A transfer system comprising:
a first transporting part which transports an article to a first transfer position;
a transferring part having a holding part which holds the article, the transferring part transferring the article, having been transported to the first transfer position, to a second transfer position;
a first detecting part which detects that the article held by the holding part is lifted above a first height from the first transfer position; and
a control part which (a) carries out control to drive the holding part so that the holding part moves toward the second transfer position and (b) controls the first transporting part so as to transport another article to the first transfer position, in a case where the first detecting part detects that the article is lifted above the first transfer position.

2. The transfer system according to claim 1, wherein:
the article is transported to the first transfer position by the first transporting part in a state where the article is housed in a first container; and
the first height is set so as to be higher than a height of the first container which is placed at the first transfer position.

3. The transfer system according to claim 1, wherein:
the article is transported to the first transfer position by the first transporting part in a state where the article is housed in a first container; and
the first height is set so as to be higher than a highest position in a trajectory drawn by an uppermost end of the first container while the first container, having been placed to the first transfer position by the first transporting part, is being moving away from the first transfer position, the highest position being measured from the first transfer position.

4. The transfer system according to claim 1, further comprising:
a second transporting part which transports an article placed at the second transfer position; and
a second detecting part which detects that the holding part moves from the second transfer position to a position higher than a second height, wherein
the control part (a) carries out control to drive the holding part so that the holding part moves toward the first transfer position and (b) controls the second transporting part so as to transport the article, having been placed to the second transfer position, to a next position, in a case where the second detecting part detects that the holding part is located at a position higher than the second transfer position.

5. The transfer system according to claim 4, wherein:
the article is transported by the second transporting part in a state where the article is housed in a second container placed at the second transfer position; and
the second height is set so as to be higher than a height of the second container which is placed at the second transfer position.

6. The transfer system according to claim 4, wherein:
the article is transported by the second transporting part in a state where the article is housed in a second container placed at the second transfer position; and
the second height is set so as to be higher than a highest position in a trajectory drawn by an uppermost end of the second container while the second container, having been placed to the second transfer position by the second transporting part, is being transported to the next position, the highest position being measured from the second transfer position.

7. The transfer system according to claim 1, wherein:
the transferring part includes a driving part which raises and lowers the holding part and moves the holding part in two directions in a plan view.

8. A method for controlling a transfer system that includes a transporting part which transports an article to a first transfer position and a transferring part having a holding part which holds the article, the transferring part transferring the article, having been transported to the first transfer position, to a second transfer position, the method comprising:
a detection step of detecting that the article held by the holding part is lifted above a first height from the first transfer position; and
a control step of (a) carrying out control to drive the holding part so that the holding part moves toward the second transfer position and (b) controlling the transporting part so as to transport another article to the first transfer position, in a case where it is detected, in the detection step, that the article is lifted above the first transfer position.

9. A control program causing a computer to execute the detection step and the control step each of which is included in a method, recited in claim 8, for controlling a transfer system.
